# EUROPEAN PATENT SPECIFICATION

(11) **EP 2 118 010 B1**
(45) Date of publication and mention of the grant of the patent: **14.11.2012**
(21) Application number: 06829550.0
(22) Date of filing: 13.12.2006
(51) Int. Cl.: C01D 9/00, C09K 5/06

(54) **MULTINARY SALT SYSTEM FOR STORING AND TRANSFERRING THERMAL ENERGY**
MULTINÄRES SALZSYSTEM ZUR SPEICHERUNG UND ÜBERTRAGUNG VON WÄRMEENERGIE
SYSTEME DE SEL MULTINAIRE POUR STOCKER ET TRANSFERER DE L'ENERGIE THERMIQUE

(43) Date of publication of application: 18.11.2009
(73) Proprietor: Solar Millennium AG, 91052 Erlangen (DE)
(72) Inventor: GLADEN, Henner, Dr., 91054 Erlangen (DE); WASSERSCHEID, Peter, 91058 Erlangen (DE); MEDVED, Mitja, 91058 Erlangen (DE)
(74) Representative: Gassner, Wolfgang
(86) International application number: PCT/EP2006/011973
(87) International publication number: WO 2008/071205

(56) References cited:
- DE-A1- 3 038 844
- GB-A- 992 418
- US-A- 4 454 724
- US-A- 4 803 958
- EWEKA ET AL: "Non-ideal change of electrical conductivity on solidification and remelting of salt eutectics" SOLID STATE IONICS, NORTH HOLLAND PUB. COMPANY. AMSTERDAM, NL, vol. 177, no. 15-16, 15 June 2006 (2006-06-15), pages 1245-1250, XP005614635 ISSN: 0167-2738
- TRIPP TERRANCE B: "VAPOR PRESSURES OF HYDRATE MELTS CONTAINING LITHIUM NITRATE AND ALKALI NITRITES", PROCEEDINGS OF THE INTERNATIONAL SYMPOSIUM MOLTEN SALTS, PENNINGTON, NJ, US, vol. 84, no. 2, 1 January 1984 (1984-01-01), pages 403-410, XP008082370,

## Description

### Background of the invention

The invention relates to a salt composition and a salt aqueous liquid solution. The invention further relates to the use of said salt composition or salt aqueous liquid solution for storing and transferring thermal energy.

Thermal energy has to be transferred in many industrial applications, e. g. for operating power plants, for vulcanisation techniques, and others. For this purpose commonly heat transfer fluids like ionic liquids and molten salts are used.

The use of ionic liquids is disclosed e. g. by WO 2004/090066 A1. It is known, that organic ionic liquids may have melting temperatures far below 0°C. However, ionic liquids usually have very high degradation rates above temperatures of 400°C, which are prohibitive for their use in many applications.

Large volumes of molten salts are for example used as heat transfer and in particular as heat storage media in solar power plants. Such salts have to be available at low costs. For economical as well as for technical reasons it is desirable to keep the temperature of the salt high for a long time. This requires a high long term thermal stability, i. e. a very low thermal decomposition rate at high temperatures. Further, it is desirable for such a salt to have a low melting point in order to increase the application area thereof.

There are known binary salts composed in a one to one mol ratio or of 60% by weight NaNO₃ and 40% by weight KNO₃. A disadvantage of these eutectic mixtures is a relatively high melting point of 230°C.

On basis of such binary salts ternary salt compositions may be produced, which are modified by either organic or inorganic additives. A widely used salt composition consists of 53% by weight KNO₃, 40% by weight NaNO₂ and 7% by weight NaNO₃. This salt composition has a melting point of 146°C.

From DE 30 38 844 C2 it is known to use Ca(NO₃)₂ as additive instead of NaNO₂. A salt composition containing an amount of 44% by weight Ca(NO₃)₂, 44% by weight KNO₃ and 12% by weight NaNO₃ has a melting point of 133°C. However, at a temperature closely above the melting point, the salt has a high viscosity of at least 300 mPas. As consequence tanks, tubes, or pipelines being used for retaining or circulating the molten salt cannot fully be emptied, e. g. if maintenance operations are necessary. This can lead to blockages or incrustation when e. g. pipelines or heat exchangers are set in operation again. In order to overcome this problem there have to be provided additional heating devices.

Other salt compositions using basically Mg(NO₃)₂ and LiNO₃ are known from US 5,591,374, US 5,728,316 and US 6,627,106 B1.

US-A-4 454 724 discloses an aqueous absorbent solution comprised of water and a non-aqueous component. The non-aqueous component contains an amount of at least 10 wt% KNO₂, an amount of at least 15 wt% NaNO₂ and an amount of 50 wt% LiNO₃.

GB 992 418 A discloses a ternary system of potassium, sodium and lithium nitrates having the following composition: 57,6 wt% KNO₃, 16,2 wt% NaNO₃ and 26,2 wt% LiNO₃.

Eweka, E. I. and Kerridge, D. H. "Non-ideal change of electrical conductivity on solidification and remelting of salt eutectics", Solid State Ionics, North Holland Pub. Company Amsterdam, NL, Vol. 177, no. 15-16, 15 June 2006, pages 1245-1250 concerns the investigation of physical properties of the system LiNO₃-NaNO₃-KNO₃.

Tripp Terrance B.: "Vapor pressures of hydrate melts containing lithium nitrate and alkali nitrites", Proceedings of the International Symposium Molten Salts, Pennington, NJ, US, vol. 84, no. 2, 1 January 1984, pages 403-410 concerns an investigation regarding vapor pressures of the system 0,52 LiNO₃-0,17 KNO₂-0.31 NaNO₂-H₂O.

US-A-4 803 958 discloses an absorbent solution comprising sodium nitrate, potassium nitrate and lithium nitrate in aqueous solution.

### Summary of the invention

An object of the invention is to provide a salt composition having a low melting point and a high stability at high temperatures. The salt composition should be suitable for use as thermal energy storage and/or transfer media. The salt composition should be easy to produce and easy to handle. A further object of the invention is to provide a salt aqueous liquid solution containing the salt composition for the use as thermal energy storage and/or transfer media. A further object is to provide an easier handling and transportation of the aqueous liquid solution during its application as well as during maintenance operations.

This object is solved by a salt composition containing an amount of at least 10% by weight KNO₂, an amount of at least 15% by weight NaNO₂, and an amount of at least 10% by weight and less than 35% by weight LiNO₃.

The term "salt composition" has to be understood generally. A salt composition may comprise a "salt mixture" of the above inorganic salts. The salt mixture containing two or more salts can be present in a solid form as a granulate, e.g. with an average grain size diameter of 0.1 to 25 mm, or a fine ground powder. It can be transported in bags or other containers and can be commercially sold in a state ready for its use. A salt composition may also comprise a "salt solid solution" which has been molten and solidified at least once and is present in a solid form. It is thus possible to cast the salt melt into a mold of arbitrary form and size. For example, the salt solid solution can be compactly formed as a block or a bar to facilitate the handling, storage and transport thereof. Of course, it can also be ground and be provided as a granulate or a powder.

With the proposed inorganic salt composition the melting point can be lowered. It is even possible to achieve a melting point far below 100°C. This allows for lowering the minimum operating temperatures.

Only a few °C above the melting temperature viscosities of the molten salt composition far below 300 mPas can be achieved. For maintenance operations the molten salt can be removed almost completely from the tanks, tubes, and pipelines. Thus, no blockages or incrustations are formed.

In the case of melting temperatures below 100°C it is advantageously possible in certain applications to add a liquid, preferably water, during operation, without vaporization occurring. Thus, no pressure containers are necessary to avoid water vaporization.

Halides like chlorides or fluorides being corrosive to metals are substantially absent in the salt composition. Thus, corrosion, e.g. in steel pipelines, can be significantly reduced. The salt composition of the invention may also be used without an addition of water. In this case a formation of hydrogen due to corrosion effects in metals can be avoided. Further, the salt composition of the invention may essentially be free of sublimable substances resulting in an enhanced long term stability of the weight ratio of the salt components.

Furthermore, up to a temperature of 500°C the degradation rate is low. The proposed salt composition thus can be used for longer times. The salt composition can be used for a wide range of applications. Besides that, the above salt composition can be produced at a low price. The salt composition is easy to handle. With respect to environmental and safety reasons, the composition is non-toxic for humans and non-flammable.

According to an embodiment of the invention the salt composition contains an amount of less than 55% by weight KNO₂. The salt composition may also contain an amount of less than 35% be weight NaNO₂. Also, the salt composition contains an amount of less than 35% by weight LiNO₃. The salt composition may consist of the above three salts and form a ternary salt composition. However, it is possible to add at least one further salt component. Such a multinary salt composition containing three or more components features a further lowering of the melting point and an improvement of the thermal stability of the molten salt.

The salt composition may further contain an amount of up to 50% by weight Ca(NO₃)₂, preferably up to 20% by weight, more preferably up to 10% by weight. Ca(NO₃)₂ can be commercially provided in the form of Ca(NO₃)₂·4H₂O. The salt composition may further contain an amount of up to 50% by weight Ca(N0₃)₂·4H₂O, preferably up to 20% by weight, more preferably up to 10% by weight. With these additives the viscosity of the salt composition can be lowered. At a given temperature an enhanced flowing capability and therewith a faster transport through the tubes of e. g. a heat exchanger of a power plant is possible.

The salt composition may contain an amount of at least 30% by weight KNO₃. The salt composition may further contain an amount of up to 50% by weight KNO₃. With salt compositions containing KNO₃ as further component a melting point even below 90°C can be achieved, yielding clear and low viscous melts.

According to an embodiment of the invention the salt composition advantageously contains at least one of the substances: NaNO₃, Sr (NO₃)₂, Ba (NO₃)₂, RbNO₃, CsNO₃. All substances have low degradation rates above a temperature of 400°C. When using these further additives the operating range of the salt composition can be varied, i. e. by varying the melting point, viscosity, degradation rate, and the like.

According to the invention a salt aqueous liquid solution contains the salt composition in an amount of at least 30% by weight and water in an amount of up to 70% by weight. The term "liquid solution" means an unsaturated aqueous solution of at least one salt. By the addition of water to the salt composition the operating range of the salt can be extended down to room temperature or below. Since the salt liquid solution solidifies at 0°C or at even lower temperatures, it can be removed completely from the containers, pipelines, and tubes, if maintenance operations are necessary. Since melting temperatures of the salt composition of the invention below 100°C can be achieved, an addition of water at ambient pressure conditions to the salt composition being in a liquid state or further addition of water to the salt aqueous liquid solution is possible, without vaporization occurring.

According to the invention a salt composition or a salt liquid solution is used for storing thermal energy. Thermal energy can be stored by heating up a reservoir of a molten salt. The stored thermal energy can be used or transferred into another energy form, if necessary.

According to the invention it is provided that a salt composition or a salt liquid solution is used for transferring thermal energy. Thermal energy can be transported by use of the liquid salt or an aqueous solution containing the salt over a certain distance between a location, where the thermal energy is produced, and a location, where the thermal energy has to be delivered to. Also, different energy systems can be connected as for example a thermal energy producing and storing system and a system which converts the thermal energy into other energy forms, e. g. electricity.

### Brief description of the drawings

- Fig. 1: shows the viscosity of a first example of a salt composition depending on the shear rate for various temperatures,
- Fig. 2: shows the viscosity of a third example of a salt composition depending on the temperature,
- Fig. 3: shows a parabolic trough power plant with thermal storage and pipelines for transferring thermal energy, and
- Fig. 4: shows a parabolic trough collector.

### Detailed description of preferred embodiments

Hereinafter, three embodiments (A, B, C) of salt compositions and/or salt aqueous liquid solutions provided by the invention are described in more detail. Furthermore, an embodiment for the use of a salt composition and/or salt aqueous liquid solution provided by the invention as storage or transfer media of thermal energy is discussed with respect to the drawings.

Embodiments of salt compositions:
(A) KNO₂ - NaNO₂ - LiNO₃ - KNO₃
   with a composition of preferably 14-17 % by weight KNO₂, 27-30 % by weight NaNO₂, 18-20 % by weight LiNO₃ and 35-38 % by weight KNO₃;
   Example (A1): A composition containing approximately 15.8% by weight KNO₂, 28.5% by weight NaNO₂, 19.4% by weight LiNO₃, and 36.3% by weight KNO₃;
(B) KNO₂ - NaNO₂ - LiNO₃ - KNO₃ - Ca (NO₃) ₂·4H₂O
   with a composition of preferably 14-16 % by weight KNO₂, 26-28 % by weight NaNO₂, 17-20 % by weight LiNO₃, 33-36 % by weight KNO₃ and 3-6 % by weight Ca (NO₃) ₂·4H₂O;
   Example (B1): A composition containing approximately 15.0% by weight KNO₂, 27.1% by weight NaNO₂, 18.5% by weight LiNO₃, 34.7% by weight KNO₃, and 4.7% by weight Ca(NO₃)₂·4H₂O; and
(C) KNO₂ - NaNO₂ - LiNO₃ - Ca (NO₃) ₂·4H₂O
   with a composition of preferably 45-49 % by weight KNO₂, 18-22 % by weight NaNO₂, 27-31 % by weight LiNO₃, and 3-6 % by weight Ca (NO₃) ₂·4H₂O;
   Example (C1): A composition containing approximately 46.7% by weight KNO₂, 19.8% by weight NaNO₂, 28.6% by weight LiNO₃, and 4.9% by weight Ca(NO₃)₂·4H₂O).
(D) KNO₂ - NaNO₂ - LiNO₃
   with a composition of preferably 48 - 50% by weight KNO₂, 19 - 21% by weight NaNO₂, and 29 - 31% by weight LiNO₃.

Each of the salt compositions may contain unavoidable impurities.

Long term experiments with the salt compositions (A1, B1, C1) in test-tubes made of stainless steel under an argon shield gas atmosphere of 12 bar and at temperatures up to 500°C have been carried out. The mass loss of the salt composition (A1) has been measured. The salt composition (A1) has not shown any significant mass loss for temperatures below 450°C during the 6 weeks lasting experiment. Above 450°C, the salt composition (A1) has shown a mass loss of 0.02 % by weight per day.

The mass loss of the salt composition (B1) has been shown to be negligible below 450°C. Between 450°C and 500°C the mass loss has been about three times larger compared to the salt composition (A1).

Under an inert protective gas atmosphere at ambient pressure, the salt composition (C1) has shown a not measurable mass loss in one week at temperatures up to 350°C.

A reason for the mass loss at very high temperatures is mainly that the test-tubes have undergone oxidation and corrosion processes. During the tests, Lithium contained in the melts formed LiO₂, which is a product of oxidation processes. Using the above salt compositions at a temperature above 400°C however, it has been possible to reduce the mass loss, such that even after 6 to 8 weeks the melting temperature has still remained below 100°C.

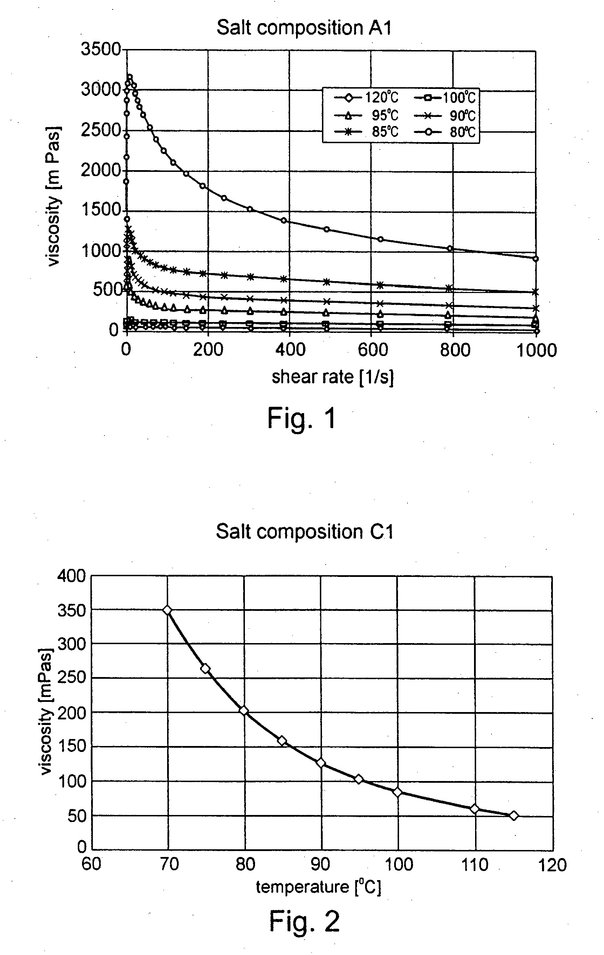

Fig. 1 shows the viscosity in mPas of the salt composition (A1) depending on the shear rate in 1/s for various temperatures. The viscosity has been measured up to temperatures of 120°C. Salt composition (A1) has a melting temperature in a range of 80°C and 90°C. The viscosity at 100°C and a shear rate of 400 1/s is 100 mPas but at 90°C and the same shear rate 400 mPas as can be seen in Fig. 1. Thus, the composition shows a strongly non-Newtonian behavior that is particular strong at low shear rates and temperatures below 100°C. Only for shear rates above 1000 1/s the viscosity can be taken as constant. The reason for this behavior is expected to be due to a partly crystallized salt composition at lower temperatures. The overall viscosity above 100°C is lower than 100 mPAs. The proposed salt composition (A1) is in particular suitable for heat transfer in high temperature applications.

Fig. 2 shows the viscosity in mPas of the salt composition (C1) depending on the temperature in °C. The viscosity has been measured up to temperatures of 115°C. It decreases exponentially from about 350 mPas at 70°C to about 50 mPas at 115°C. Thus, even smaller viscosities compared to the salt composition (A1) can be observed. The salt composition (C1) behaves as a Newtonian liquid, i.e. the viscosity does not depend on the shear rate. Salt composition (C1) has a melting point of around 80°C. Above this temperature, no crystalline materials can be observed in the melt, which is clear and transparent. The melt solidifies in a glassy form from the melt of increased viscosity. The salt composition D has a slightly higher melting point of 87°C and shows a slightly higher viscosity than the composition C1.

The salt composition (B) contains Ca(NO₃)₂ 4H₂O as further salt component compared to the salt composition (A). It is possible for example to supplement up to 10 % by weight of this further salt component. Compared to the salt composition (A), a much lower viscosity can be observed for salt composition (B). Alternatively, there may be added of up to 10 % by weight Ca (NO₃)₂.

The melting temperature of composition (B1) is between 75°C and 90°C, the viscosity at a temperature of 100°C and a shear rate of 400 1/s is around 85 mPas and at a temperature of 90°C and the same shear rate around 65 mPas. Again, a strong non-Newtonian behavior of the viscosity can be observed below a temperature of 100°C. Compared to composition (A1) a significantly lower viscosity is obtained.

All salt compositions (A, B, C, D) can be used in a molten state as a heat transfer fluid in a temperature range between 95°C and 350°C at ambient pressure. The salt compositions (A, B, C) do not loose weight due to oxidation or corrosion below 350°C. Under an inert shield gas atmosphere it is possible to use the salt melts of the invention up to temperatures of 450°C. Operating temperatures up to 500°C are possible for short time intervals without substantially changing physical features of the salt compositions. Above a temperature of 350°C Li₂O and Na₂O may be formed due to oxidation processes. In this case it may be necessary to repeatedly check the composition of the salt melt or solution, respectively, and to add, if necessary, corresponding nitrates and nitrites as well as to remove the oxides from the composition in order to keep the relation of the salt components in the salt composition constant.

Experiments on various nitrates and nitrites have shown that in particular KNO₃, NaNO₂, LiNO₃, KNO₂, Ca (NO₃)₂, NaNO₃, Sr(NO₃)₂, Ba(NO₃)₂, RbNO₃ and CsNO₃ show acceptably low degradation rates above 400°C. Salt compositions consisting of the proposed salt components are in particular suitable for use in a high temperature range.

By adding 50 to 70 % by weight of water to the salt composition, preferably 55 to 65 % by weight, the solidification point of the solved salt composition is reduced below 0°C. This salt liquid solution can be stored at room temperature in tanks and can be easily transported in this form. A further advantage of salt compositions using LiNO₃ and/or Ca(NO₃)₂ is their strong hygroscopicity due to the presence of Li and/or Ca ions. Compared to non-hygroscopic compositions the salt compositions according to the invention can be solved in water much faster. If maintenance work is necessary, water can be added quickly to dissolve the salt such that it can be removed from the pipes and tubes. Due to the melting temperature of the salt composition below 100°C water can always be added to the salt being in a liquid state, without vaporization occurring. Thus, no pressure containers are necessary to avoid water vaporization.

For provision of economically profitable heat storage and heat transfer products it is possible also to offer the salt composition as a salt mixture, where no water is added but the respective salt components or substances are mixed homogeneously. Thus, a product is obtained, which is ready for use without making further processing necessary. The salt mixture or salt solid solution can be stored and transported easily in its solid form.

The above described salt compositions or aqueous liquid solutions are characterized by low melting points below 100°C, low viscosities and high long term thermal stabilities below 400°C.

An example for industrial application, where a large quantity of a salt composition according to the invention may be used with particular advantage are solar power plants. More specifically, in parabolic trough power plants molten salt compositions of the invention may be used to store and transfer thermal energy.

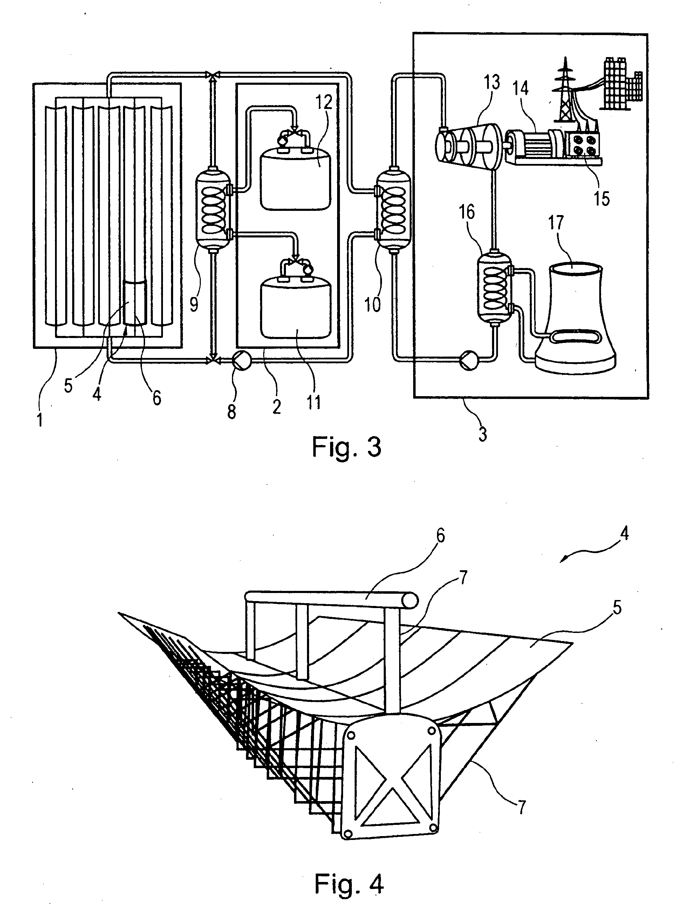

Fig. 3 shows a parabolic trough power plant with thermal storage and pipelines for transferring thermal energy. In such a power plant the proposed salt compositions may be used in a molten state to store and transfer thermal energy.

The power plant mainly comprises a solar field 1, a storage system 2 and a power plant block 3. The solar field 1 comprises many parallel rows, each row consisting of several parabolic solar collectors 4 in a series arrangement. A parabolic trough collector 4 as shown in Fig. 4 consists of parabolic mirrors 5, an absorber pipe 6 located in the focal line of the reflecting surface formed by the mirrors 5, and a rotatably arranged metal structure 7 for carrying the mirrors 5 and the absorber pipe 6. A heat transfer fluid like an oil or a molten salt circulates through the absorber pipes 6 across the solar field 1 and through a pipeline system 8 connecting the solar field 1 with the storage system 2 via an oil to salt or salt to salt heat exchanger 9 and the power plant block 3 via an oil to steam or salt to steam heat exchanger 10.

The storage system 2 comprises a cold tank 11 and a hot tank 12 which are filled with liquid salt for storing thermal energy. The salt in the cold tank 11 has a temperature of about 280°C and the salt in the hot tank 12 has a temperature of about 380°C or even up to 450°C or 500°C.

The power plant block 3 comprises a further pipeline system for transferring steam to a steam turbine 13 being connected to a generator 14 and a transformer 15 and a further heat exchanger 16 being connected to a cooling tower 17. Through the oil/steam or molten salt/steam heat exchanger 10 the oil or molten salt produces steam in the power plant block 3 which in turn drives conventional steam turbines 13 with power generators 14.

The solar power plant can be operated up to 24 h with solar energy. Over the day the collectors 4 follow the sun, the parabolic mirrors 5 concentrate the solar radiation to the absorber tubes 6 and heat the oil or molten salt circulating therein up to a temperature of almost 400°C. Using the salt composition of the invention temperatures up to 500°C are possible. The oil or salt transmits its thermal energy to heat exchangers 9, 10 to generate steam that drives a turbine 13. Electricity is then generated by the connected generator 14. If sun radiation is strong enough, the solar field supplies sufficient energy to generate electricity and fill up the heat storage system 2 simultaneously. When heat is supplied to the storage system 2 via the oil to salt or molten salt to salt heat exchanger 9 cold salt is pumped from the cold tank 11 into the hot tank 12 through the heat exchanger 9. When sun sets or when the sky is cloudy, the solar field 1 together with the storage system 2 can supply energy to drive the turbine 13. In this case the hot salt is pumped back into the cold tank 11 to give back the thermal energy to the pipeline system 8. Over the night thermal energy is supplied completely by the storage system 2.

In the above embodiment of the invention the use of a salt composition or a salt aqueous liquid solution as storage and heat transfer fluid in a solar power plant has been described with reference to the drawings. However, the invention is not limited to this example. Other examples, where molten salts are used to store and/or transfer thermal energy are power plants in general, vulcanisation techniques, all kinds of machines and technical apparatuses, which supply, transfer and consume heat in general, waste heat, process heat, and so on. A further example is the use of a salt composition or a salt aqueous liquid solution as coolant or heating media in chemical reactors.

A salt composition can also be used as working media in machines with components in motion for transferring a moment or force or to take over the function as lubrication or sliding means.

## Claims

1. Salt composition containing an amount of at least 10 % by weight KNO₂, an amount of at least 15 % by weight NaNO₂, and an amount of at least 10 % by weight and less than 35% by weight LiNO₃.

2. Salt composition according to claim 1, containing an amount of less than 55 % by weight KNO₂.

3. Salt composition according to one of the preceding claims, containing an amount of less than 35% by weight Na-NO₂.

4. Salt composition according to one of the preceding claims, further containing an amount of up to 50 % by weight Ca(NO₃)₂, preferably up to 20 % by weight, more preferably up to 10% by weight.

5. Salt composition according to one of the preceding claims, further containing an amount of up to 50 % by weight Ca(NO₃)₂-4H₂O, preferably up to 20 % by weight, more preferably up to 10% by weight.

6. Salt composition according to one of the preceding claims, further containing an amount of at least 30 % by weight KNO₃.

7. Salt composition according to one of the preceding claims, further containing an amount of up to 50 % by weight KNO₃.

8. Salt composition according to one of the preceding claims, containing at least one of the substances: NaNO₃, Sr(NO₃)₂, Ba(NO₃)₂, RbNO₃, CsNO₃.

9. Salt aqueous liquid solution containing the salt composition of one of the preceding claims in an amount of at least 30 % by weight and water in an amount of up to 70 % by weight.

10. Use of a salt composition or a salt aqueous liquid solution according to one of the preceding claims for storing thermal energy.

11. Use of a salt composition or a salt aqueous liquid solution according to one of the preceding claims for transferring thermal energy.

## Patentansprüche

1. Salzzusammensetzung, enthaltend eine Menge von zumindest 10 Gew.% KNO₂, eine Menge von zumindest 15 Gew.% NaNO₂, und eine Menge von zumindest 10 Gew.% und von weniger als 35 Ges.% LiNO₃.

2. Salzzusammensetzung nach Anspruch 1, enthaltend eine Menge von weniger als 55 Gew.% KNO₂.

3. Salzzusammensetzung nach einem der vorhergehenden Ansprüche, enthaltend eine Menge von weniger als 35 Gew.% NaNO₂.

4. Salzzusammensetzung nach einem der vorhergehenden Ansprüche, weiterhin enthaltend eine Menge von bis zu 50 Gew.% Ca(NO₃)₂, vorzugsweise bis zu 20 Gew.%, besonders bevorzugt bis zu 10 Gew.%.

5. Salzzusammensetzung nach einem der vorhergehenden Ansprüche, weiterhin enthaltend eine Menge von bis zu 50 Gew.% Ca(NO₃)₂·4H₂O, vorzugsweise bis zu 20 Gew.%, besonders bevorzugt bis zu 10 Gew.%.

6. Salzzusammensetzung nach einem der vorhergehenden Ansprüche, weiterhin enthaltend eine Menge von zumindest 30 Gew.% KNO₃.

7. Salzzusammensetzung nach einem der vorhergehenden Ansprüche, weiterhin enthaltend eine Menge von bis zu 50 Gew.% KNO₃.

8. Salzzusammensetzung nach einem der vorhergehenden Ansprüche, enthaltend zumindest eine der folgenden Substanzen: NaNO₃, Sr(NO₃)₂, Ba(NO₃)₂, RbNO₃, CsNO₃.

9. Wässrig flüssige Salzlösung, enthaltend die Salzzusammensetzung eines der vorhergehenden Ansprüche in einer Menge von zumindest 30 Gew.% und Wasser in einer Menge von bis zu 70 Gew.%.

10. Verwendung einer Salzzusammensetzung oder einer wässrig flüssigen Salzlösung nach einem der vorhergehenden Ansprüche zum Speichern thermischer Energie.

11. Verwendung einer Salzzusammensetzung oder einer wässrig flüssigen Salzlösung nach einem der vorhergehenden Ansprüche zum Übertragen thermischer Energie.

## Revendications

1. Composition de sel contenant une quantité d'au moins 10% en poids de KNO₂, une quantité d'au moins 15% en poids de NaNO₂, et une quantité d'au moins 10% en poids et inférieure à 35% en poids de LiNO₃.

2. Composition de sel selon la revendication 1, contenant une quantité inférieure à 55% en poids de KNO₂.

3. Composition de sel selon l'une des revendications précédentes, contenant une quantité inférieure à 35% en poids de NaNO₂.

4. Composition de sel selon l'une des revendications précédentes, contenant en outre une quantité pouvant aller jusqu'à 50% en poids de Ca(NO₃)₂, de préférence jusqu'à 20% en poids, en particulier jusqu'à 10% en poids.

5. Composition de sel selon l'une des revendications précédentes, contenant en outre une quantité pouvant aller jusqu'à 50% en poids de Ca(NO₃)₂·4H₂O, de préférence jusqu'à 20% en poids, en particulier jusqu'à 10% en poids.

6. Composition de sel selon l'une des revendications précédentes, contenant en outre une quantité d'au moins 30% en poids de KNO₃.

7. Composition de sel selon l'une des revendications précédentes, contenant en outre une quantité pouvant aller jusqu'à 50% en poids de KNO₃.

8. Composition de sel selon l'une des revendications précédentes, contenant au moins l'une des substances: NaNO₃, Sr(NO₃)₂, Ba(NO₃)₂, RbNO₃, CsNO₃.

9. Solution liquide aqueuse de sel contenant la composition de sel de l'une des revendications précédentes dans une quantité d'au moins 30% en poids et de l'eau dans une quantité pouvant aller jusqu'à 70% en poids.

10. Utilisation d'une composition de sel ou d'une solution liquide aqueuse de sel selon l'une des revendications précédentes pour emmagasiner de l'énergie thermique.

11. Utilisation d'une composition de sel ou d'une solution liquide aqueuse de sel selon l'une des revendications précédentes pour transférer de l'énergie thermique.
